(19) Europäisches Patentamt
European Patent Office
Office européen des brevets

(11) **EP 1 090 225 B1**

(12) **EUROPÄISCHE PATENTSCHRIFT**

(45) Veröffentlichungstag und Bekanntmachung des Hinweises auf die Patenterteilung:
**17.09.2008 Patentblatt 2008/38**

(21) Anmeldenummer: **99939365.5**

(22) Anmeldetag: **17.06.1999**

(51) Int Cl.:
**F02P 5/152** *(2006.01)*

(86) Internationale Anmeldenummer:
**PCT/DE1999/001787**

(87) Internationale Veröffentlichungsnummer:
**WO 1999/067530 (29.12.1999 Gazette 1999/52)**

(54) **VERFAHREN ZUR ZYLINDERSELEKTIVEN KLOPFREGELUNG EINER BRENNKRAFTMASCHINE**

METHOD FOR CYLINDER-SELECTIVE KNOCK ADJUSTMENT IN AN INTERNAL COMBUSTION ENGINE

PROCEDE POUR LA REGULATION ANTI-COGNEMENT EN FONCTION D'UN CYLINDRE DANS UN MOTEUR A COMBUSTION INTERNE

(84) Benannte Vertragsstaaten:
**DE FR GB**

(30) Priorität: **22.06.1998 DE 19827704**

(43) Veröffentlichungstag der Anmeldung:
**11.04.2001 Patentblatt 2001/15**

(73) Patentinhaber: **Continental Automotive GmbH 30165 Hannover (DE)**

(72) Erfinder:
• **CIANCIARA, Wojciech**
  **D-93173 Grünthal (DE)**
• **FISCHER, Gerhard**
  **D-93142 Maxhütte-Deglhof (DE)**
• **HAUG, Thomas**
  **D-94315 Straubing (DE)**

(56) Entgegenhaltungen:
**US-A- 4 819 603     US-A- 4 882 695
US-A- 5 243 942**

• **PATENT ABSTRACTS OF JAPAN vol. 017, no. 530 (M-1485), 24. September 1993 (1993-09-24) & JP 05 141334 A (NIPPONDENSO CO LTD), 8. Juni 1993 (1993-06-08)**

EP 1 090 225 B1

**Beschreibung**

Die Erfindung betrifft ein Verfahren zur zylinderselektiven Klopfregelung einer Brennkraftmaschine nach dem Oberbegriff von Anspruch 1. Ein derartiges Verfahren ist aus DE 29 25 770 A1 bekannt.

Bei Auftreten von Motorklopfen in einem Zylinder z der Brennkraftmaschine wird der Zündwinkel für diesen Zylinder um einen bestimmten Betrag - Schrittweite $SK_{dec}$ - nach spät verstellt, wodurch die Wahrscheinlichkeit des Auftretens klopfender Verbrennung in diesem Zylinder verringert wird. Bei anschließend nichtklopfendem Motorbetrieb wird der Zündwinkel langsam wieder um einen vorgegebenen Betrag $SK_{inc}$ nach früh verstellt.

Der bekannte Gesamtzündwinkel ZW(z) für einen Zylinder z in einem bestimmten Betriebspunkt setzt sich aus einem von Last L und Motordrehzahl n abhängigen, in einem Kennfeld gespeicherten und - bei einem Vierzylindermotor alle 180°KW - aktualisierten (deshalb "zylinderselektiven") Grundzündwinkel GZ(z) bei klopffreiem Betrieb, gerechnet ab dem der Zündung am nächsten liegenden Zünd-Totpunkt ZOT(z), und aus einem bei diesem Zylinder z infolge Motorklopfens zusätzlichen Klopfverstellwinkel KNK(z) zusammen: ZW(z) = GZ(z) + KNK(z), wobei zu beachten ist, daß der Klopfverstellwinkel KNK(z) nur negative Vorzeichen annehmen kann, gemäß der Festlegung: ein positives Vorzeichen bedeutet eine Verschiebung nach "früh", ein negatives Vorzeichen hingegen eine Verschiebung nach "spät".

Die jeweiligen Klopfverstellwinkel KNK(z) werden in ein last-und drehzahlabhängiges Kennfeld pro Zylinder eingetragen. Beim Wechseln von einem Betriebspunkt zum nächsten bleibt der zuletzt eingetragene Klopfverstellwinkel KNK(z) im alten Betriebspunkt gespeichert. Dieser Wert wird bei erneutem Eintritt in diesen Betriebspunkt für die Klopfregelung wieder als Klopfverstellwinkel KNK(z) verwendet. Dieses Verfahren hat den Nachteil, daß in Abhängigkeit vom Zeitpunkt des Betriebspunktwechsels ein relativ zufälliger Klopfverstellwinkel gespeichert ist.

Daraus ergeben sich folgende Nachteile:

- es findet keine exakte Adaption der Klopfgrenze statt,
- es ergibt sich bei Übergängen zwischen den Adaptionsbereichen kein homogener Zündwinkelverlauf und damit auch kein stetiger Drehmomentverlauf,
- die Brennkraftmaschine wird nicht exakt an der Klopfgrenze betrieben; somit ist nicht sichergestellt, daß sich ein optimales Drehmoment sowie optimaler spezifischer Kraftstoffverbrauch einstellt.

Bei einer bekannten Einrichtung zum Regeln des Zündzeitpunktes einer Brennkraftmaschine (US 4,819,603) wird der jeweilige Klopfverstellwinkel in ein last- und drehzahlabhängiges Kennfeld pro Zylinder eingetragen. Dieser Wert wird bei erneutem Eintritt in diesen Betriebsbereich für die Klopfregelung wieder als Klopfverstellwinkel verwendet.

Weiter ist eine Einrichtung zum Regeln des Zündzeitpunktes und des Ladedrucks einer Brennkraftmaschine bekannt (US 4,882,695), der Zündzeitpunkt in Abhängigkeit von einem Klopfsignal für jeden Zylinder berechnet wird. Weiter wird ein Mittelwert aller Zündzeitpunkte gebildet. Dieser Mittelwert wird mit einem vorbestimmten Schwellwert verglichen und in Abhängigkeit von diesem Vergleich der Ladedruck ggf. reduziert.

Es ist Aufgabe der Erfindung, das bekannte Verfahren zur zylinderselektiven Klopfregelung einer Brennkraftmaschine dahingehend zu verbessern, daß eine möglichst genaue Adaption der Klopfgrenze stattfindet, daß sich bei Übergängen zwischen den Adaptionsbereichen ein homogener Zündwinkelverlauf und damit auch ein stetiger Drehmomentverlauf ergibt, und daß sich ein optimales Drehmoment sowie ein optimaler spezifischer Kraftstoffverbrauch einstellt.

Diese Aufgabe wird erfindungsgemäß durch ein Verfahren mit den Merkmalen gemäß Anspruch 1 gelöst.

Die Erfindung besteht im wesentlichen darin, daß zu dem bekannten zylinderselektiven Klopfverstellwinkel KNK(z) einster Adaptionswert AD1 eines ersten Adaptionskreises und ein zweiter Adaptionswert AD2 eines allen Zylindern gemeinsamen zweiten Adaptionskreises hinzugefügt werden, deren Erzeugung nachstehend anhand einer schematischen Zeichnung näher erläutert wird. Der Gesamtzündwinkel ZW(z) für einen Zylinder z setzt sich gemäß der nachstehenden Formel folgendermaßen zusammen:

$$ZW(z) = GZ(z) + KNK(z) + AD1(z) + AD2,$$

wobei jeweils die Vorzeichen dieser Werte zu beachten sind: GZ(z), AD1(z) und AD2 können positive oder negative Vorzeichen haben (was Früh- oder Spätverstellung bedeuten kann), während KNK(z) nur negatives Vorzeichen (Spätverstellung) haben kann.

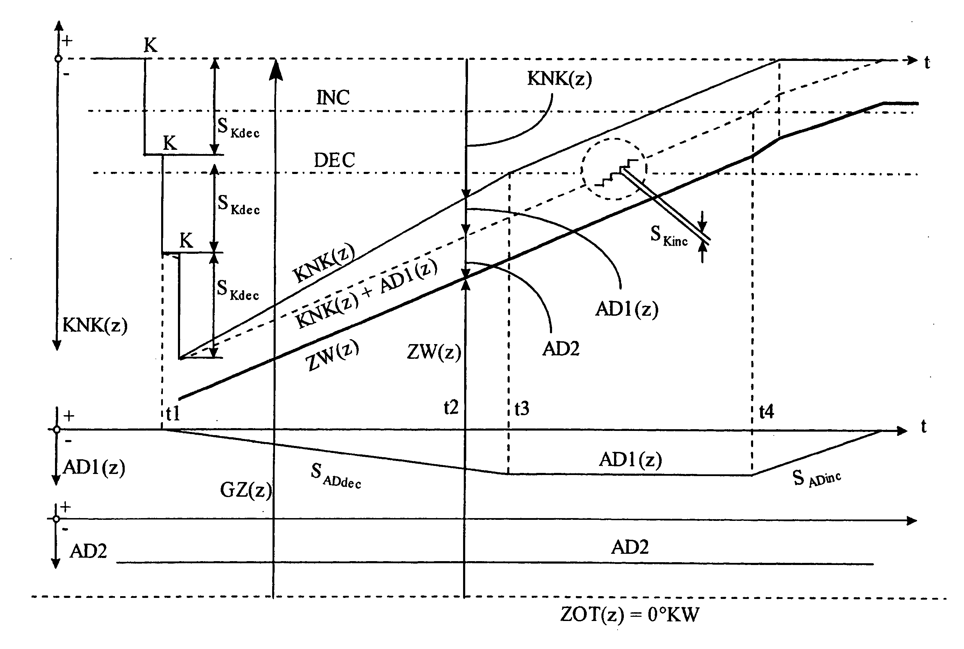

In der Zeichnung sind, für einen bestimmten, von Last L und Motordrehzahl n abhängigen Betriebspunkt der Brennkraftmaschine, der Grundzündwinkel GZ(z) in Bezug zum Zünd-Totpunkt ZOT(z), der Verlauf des zylinderselektiven Klopfverstellwinkels KNK(z)in Bezug zum Grundzündwinkel GZ(z), und der Verlauf des ersten und zweiten Adaptionswertes AD1 und AD2 aufgetragen.

Die Grundzündwinkel GZ(z) sind , in der Zeichnung auch als Pfeil dargestellt, für jeden Zylinder z beispielsweise als Kurbelwellenwinkel in °KW, gerechnet vom Zündtotpunkt ZOT(z) = 0°KW des Zylinders z (in der Zeichnung als waagrechte strichlierte Linie ganz unten eingezeichnet) - nach früh mit positivem , nach spät mit negativem Vorzeichen - in Abhängigkeit wenigstens von Motordrehzahl n und Last L in einem Kennfeld eingetragen und werden aus diesem, wie oben erwähnt, ausgelesen und aktualisiert. Mit diesem Grundzündwinkel wird der Zylinder z gezündet, wenn kein Motorklopfen auftritt: ZW(z) = GZ(z).

Tritt im Zylinder z jedoch Motorklopfen K auf, so wird der Gesamtzündwinkel ZW(z) um einen Klopfverstellwinkel KNK(z) nach spät verstellt (dekrementiert), und zwar jedesmal mit einer Schrittweite $S_{Kdec}$. In der Zeichnung sind nach drei aufeinanderfolgen Zündungen Klopfschläge K dargestellt, die den Gesamtzündwinkel ZW(z)um einen Wert KNK(z) = 3*$S_{Kdec}$ auf ZW(z) = GZ(z) - KNK(z) = GZ(z) - 3*$S_{Kdec}$ in Richtung spät verschieben.

Findet anschließend kein Motorklopfen mehr statt, so wird der Klopfverstellwinkel KNK(z) nach jeweils einem Motorzyklus (720°KW) oder mehreren Motorzyklen (oder in vorgegebenen zeitlichen Abständen) um einen vorgegebenen Schritt $S_{Kinc}$ verkleinert, in der Zeichnung in einem strichlierten Kreis vergrößert dargestellt, und damit auch der Gesamtzündwinkel ZW(z) wieder nach früh verschoben (inkrementiert).

Die Schrittweiten $S_{Kdec}$ und/oder $S_{Kinc}$ können Konstanten sein oder betriebspunktabhängig variieren.

In der Zeichnung sind zwei vorgegebene, vom Grundzündwinkel GZ(z) nach spät aufgetragene Schwellwerte, ein erster Schwellwert DEC und ein zweiter Schwellwert INC, als strichpunktierte Linien eingetragen, die für den ersten Adaptionswert AD1(z) des ersten Adaptionskreises von Bedeutung sind:

■ solange der Klopfverstellwinkel KNK(z) größer als der erste Schwellwert DEC ist, t1 bis t3 in der Zeichnung, soll ein zylinderselektiver erster Adaptionswert AD1(z) mit einer vorgegebenen Schrittweite $S_{ADdec}$ vergrößert werden, (wodurch der Gesamtzündwinkel ZW(z) nach spät verstellt, d.h. dekrementiert wird),

■ solange der Klopfverstellwinkel KNK(z) kleiner als der erste Schwellwert DEC und größer als der zweite Schwellwert INC ist, t3 bis t4 in der Zeichnung, soll der zylinderselektive erste Adaptionswert AD1(z) konstant sein, und

■ sobald der Klopfverstellwinkel KNK(z) kleiner als der zweite Schwellwert INC ist, ab t4 in der Zeichnung, soll der zylinderselektive erste Adaptionswert AD1(z) mit einer vorgegebenen Schrittweite $S_{ADinc}$ verkleinert werden.

In einem bevorzugten Ausführungsbeispiel soll, solange der Klopfverstellwinkel KNK(z) größer als der erste Schwellwert DEC ist, die Summe aus Klopfverstellwinkel KNK(z) und erstem Adaptionswert AD1 (gestrichelte Linie zwischen t1 und t3 in der Zeichnung) mit der Schrittweite $S_{kinc}$ inkrementiert werden, um die Inkrementiergeschwindigkeit des Gesamtzündwinkels ZW(z) nicht zu verlangsamen.

Die Schrittweite $S_{Kdec}$ ist so gewählt, daß der vorgegebene erste Schwellwert DEC, wie in der Zeichnung dargestellt, nicht schon beim ersten, sondern beispielsweise erst beim zweiten Klopfschlag zum Zeitpunkt t1 vom Klopfverstellwinkel KNK(z) überschritten wird, z.B. $S_{Kdec}$ = 3°KW und DEC = 3,5°KW. Dies hat eine dämpfende Wirkung auf die Klopfregelung.

Die ersten Adaptionswerte AD1(z), die für jeden Zylinder betriebspunktabhängig in einem Kennfeld gespeichert werden, und nachstehend beschriebene zweite Adaptionswerte AD2, sind in Einzeldiagrammen der Zeichnung für sich allein dargestellt, im oberen Diagramm ist die Summe aus GZ(z) + KNK(z) + AD1(z) als strichlierte Linie dargestellt.

Im ersten Adaptionskreis erfolgt eine zylinderselektive Klopfadaption, die abhängig von Last L und Motordrehzahl n die Zündwinkeldifferenzen aufgrund der Verdichtungsunterschiede zwischen den Zylindern adaptiert. In dem Kennfeld, in welchem die ersten Adaptionswerte AD1(z) gespeichert werden, sind die zylinderindividuellen Adaptionsanteile der Klopfregelung enthalten, die bei dem jeweiligen Betriebspunkt ermittelt wurden.

Die Abstimmung der Klopfgrenzen erfolgt üblicherweise mit einem definierten Motor und definiertem Kraftstoff. Im Normalbetrieb weisen Motoren, Komponenten und Kraftstoffe gewisse Toleranzen auf, welche die Klopfgrenze erheblich beeinflussen können. Diese Abweichungen gelten für alle Zylinder; sie ändern sich, mit Ausnahme der Kraftstoffqualität, in der Regel nur langsam.

Zur wirksamen Kompensation solcher Effekte wird ein zweiter Adaptionswert AD2 eines allen Zylindern gemeinsamen zweiten Adaptionskreises dadurch gebildet, daß im jeweiligen Betriebspunkt der Mittelwert $\overline{AD1}$ der ersten Adaptionswerte AD1(z) des ersten Adaptionskreises aller Zylinder berechnet und mit einer vorgegebenen Schwelle S2 verglichen wird. Ist der Mittelwert $\overline{AD1}$ größer als S2, so wird AD2 nach jedem Motorzyklus um ein vorgegebenes Dekrement D (mit negativem Vorzeichen) in Richtung spät, andernfalls um ein vorgegebenes Inkrement I (mit positivem Vorzeichen) in Richtung früh verändert. Bei einem Betriebspunktwechsel wird der Mittelwert $\overline{AD1}$ aus den ersten Adaptionswerten AD1(z) des neuen Betriebspunktes berechnet und mit der Schwelle S2 verglichen und AD2 entsprechend dem Vergleichsergebnis vergrößert oder verkleinert.

In der Zeichnung zeigt die fett durchgezogene Linie ZW(z) den Verlauf des Gesamtzündwinkels ZW(z) für einen Zylinder z aus Grundzündwinkel GZ(z), Klopfverstellwinkel KNK(z), erstem Adaptionswert AD1(z) und dem allen Zylindern gemeinsamen zweiten Adaptionswert AD2:

$$ZW(z) = GZ(z) - KNK(z) - AD1(z) - AD2,$$

wobei die Werte KNK(z), AD1(z) und AD2 hier jeweils eine Spätverschiebung des Zündwinkels bewirken. In einem Zeitpunkt t2 sind die momentan gültigen Größen für ZW(z), KNK(z), AD1(z) und AD2 als Pfeile dargestellt.

Üblicherweise findet keine Frühverstellung des Gesamtzündwinkels ZW(z) über den vorgegebenen Grundzündwinkel GZ(z) hinaus statt. Beispielsweise bei einem Wechsel zu einem Kraftstoff mit höherer Oktanzahl kann es jedoch sinnvoll sein, dem Rechnung zu tragen, und auch positive Werte des ersten und zweiten Adaptionskreises zuzulassen, was eine Frühverstellung des Gesamtzündwinkels über den Grundzündwinkel GZ(z) hinaus bedeuten kann.

Aus physikalischen Gründen müssen dann jedoch Betriebspunktbereiche bestimmt werden, in welchen eine solche Frühverstellung über den Grundzündwinkel GZ(z) hinaus zugelassen werden soll und müssen (ggf. betriebspunktabhängige) Grenzwerte für eine solche Frühverstellung festgelegt werden, um Motorschäden zu vermeiden.

Nach jedem Motorzyklus (alle 720°KW) werden die momentan vorliegenden Werte KNK(z), AD1(z) in den entsprechenden Kennfeldern betriebspunktabhängig, und der gemeinsame zweite Adaptionswert AD2 abgespeichert und wird der Betriebspunkt abhängig von Last L und Motordrehzahl n neu ermittelt.

Beim Abstellen der Brennkraftmaschine werden alle ersten Adaptionswerte AD1(z) des ersten Adaptionskreises in zylinderselektiven Kennfeldern und der zweite Adaptionswert AD2 des zweiten Adaptionskreises nichtflüchtig (in einem EEPROM) abgespeichert und beim nächsten Betriebsbeginn zurückgelesen.

Durch die getrennten Adaptionsgeschwindigkeiten (Schrittweiten $S_{ADdec}$, $S_{ADinc}$) beim Dekrementieren oder Inkrementieren der Adaptionswerte AD1 des ersten Adaptionskreises ist die mittlere Lage des Zündwinkels an der Klopfgrenze ziemlich genau zu bestimmen.

Durch Definition (mittels der Schwellwerte DEC und INC) von Bereichen des Klopfverstellwinkels KNK(z), in welchen keine Adaption vorgenommen wird, lösen geringe Aktivitäten der Klopfregelung keine Veränderungen der Adaptionswerte aus; dies führt zur Beruhigung des ersten Adaptionskreises und zu homogenen Zündwinkeln.

Der Klopfregelanteil setzt sich aus dem Klopfverstellwinkel KNK(z) und den beiden Adaptionswerten AD1(z) und AD2 zusammen. Vorteilhafterweise kann die Charakteristik jedes einzelnen Kreises unabhängig von denen der anderen Kreise eingestellt werden. Dadurch ist die Klopfregelung optimal an jede Brennkraftmaschine anzupassen.

Dadurch, daß die Schwellwerte DEC und INC zur Aktivierung des ersten Adaptionskreises mit den Schrittweiten $S_{Kdec}$, $S_{Kinc}$ der Klopfverstellwinkel KNK(z) verknüpft sind, erfolgt bei Veränderung der Klopfregelparameter keine Beeinflussung der Adaptionscharakteristik.

Die Eingangsgrößen für den zweiten Adaptionskreis sind die ersten Adaptionswerte AD1(z) des ersten Adaptionskreises, wodurch dessen dämpfende Wirkung ausgenutzt werden kann; es kommen nur Zündwinkelkorrekturen in den zweiten Adaptionskreis, die durch Alterungseffekte oder Änderungen der Kraftstoffqualität hervorgerufen werden.

**Patentansprüche**

1. Verfahren zur zylinderselektiven Klopfregelung einer Brennkraftmaschine, bei welchem, dem jeweiligen, von Last (L) und Motordrehzahl (n) abhängigen Betriebspunkt zugeordnet, ein vorgegebener, nicht klopfendem Betrieb zugeordneter, zylinderselektiver Grundzündwinkel (GZ(z)) und ein bei jedem auftretenden Klopfschlag (K) schrittweise in Richtung "spät" mit einer vorgegebenen Schrittweite ($S_{Kdec}$) sich vergrößernder, und bei nicht klopfendem Betrieb nach jedem Motorzyklus (720°KW) schrittweise in Richtung "früh" mit einer vorgegebenen Schrittweite ($S_{Kinc}$) sich verkleinernder, zylinderselektiver Klopfverstellwinkel (KNK(z)) einen zylinderselektiven Zündwinkel bilden, **dadurch gekennzeichnet,**
**daß** ein zylinderselektiver erster Adaptionswert (AD1(z)) eines ersten Adaptionskreises aus einem Vergleich des Klopfverstellwinkels (KNK(z)) mit einem ersten (DEC) und einem zweiten Schwellwert (INC) ermittelt wird,
**daß** der erste Schwellwert (DEC) größer als die in Richtung "spät" vorgegebene Schrittweite ($S_{Kdec}$) des zylinderselektiven Klopfverstellwinkels (KNK(z)) ist,
**daß** der zweite Schwellwert (INC) kleiner als die in Richtung "spät" vorgegebene Schrittweite ($S_{Kdec}$) des zylinderselektiven Klopfverstellwinkels (KNK(z)) ist,
**daß** der zylinderselektive Adaptionswert (AD1(z)) des ersten Adaptionskreises mit einer vorgegebenen ersten Adaptionsschrittweite ($S_{ADdec}$) nach jedem Motorzyklus (720°KW)

   - in Richtung "spät" verändert wird, solange der Klopfverstellwinkel (KNK(z)) betragsmäßig größer als der erste Schwellwert (DEC) ist,

- konstant gehalten wird, solange der Klopfverstellwinkel (KNK(z)) betragsmäßig kleiner als der erste Schwellwert (DEC) und größer als der zweite Schwellwert (INC) ist, und
- mit einer vorgegebenen zweiten Adaptionsschrittweite ($S_{ADinc}$) in Richtung "früh" verändert wird, solange der Klopfverstellwinkel (KNK(z)) betragsmäßig kleiner als der zweite Schwellwert (INC) ist,

**daß** ein allen Zylindern (z) zugeordneter zweiter Adaptionswert (AD2) eines zweiten Adaptionskreises aus einem Vergleich des Mittelwerts ($\overline{AD1}$) aller zylinderselektiven Adaptionswerte (AD1(z)) des aktuellen Betriebspunktes mit einer vorgegebenen Schwelle (S2) ermittelt wird, und
**daß** der zylinderselektive erster Adaptionswert (AD1(z)) und der allen Zylindern (z) zugeordnete, zweite Adaptionswert (AD2) zur Bildung eines zylinderselektiven Gesamtzündwinkels (ZW(z)) gemäß der Formel

$$ZW(z) = GZ(z) - KNK(z) - AD1(z) - AD2$$

herangezogen werden, mit z = Zylindernummer.

2. Verfahren nach Anspruch 1, **dadurch gekennzeichnet, daß** der zweite Adaptionswert (AD2) des zweiten Adaptionskreises

- nach jedem Motorzyklus um ein vorgegebenes Dekrement (-D) in Richtung spät verändert wird, wenn der Mittelwert ($\overline{AD1}$) aller zylinderselektiven Adaptionswerte (AD1(z)) des aktuellen Betriebspunktes negatives Vorzeichen hat und betragsmäßig größer als die Schwelle (S2) ist, und
- nach jedem Motorzyklus um ein vorgegebenes Inkrement (+I) in Richtung früh verändert wird, wenn der Mittelwert ($\overline{AD1}$) betragsmäßig kleiner als die Schwelle (S2) ist.

3. Verfahren nach Anspruch 1 oder 2, **dadurch gekennzeichnet, daß** wenigstens eine der Größen
erste Schrittweite ($S_{Kdec}$), zweite Schrittweite ($S_{Kinc}$),
erste Adaptionsschrittweite ($S_{ADdec}$), zweite Adaptionsschrittweite ($S_{ADinc}$), erster Schwellwert (DEC), zweiter Schwellwert (INC),
in einem dieser Größe zugeordneten Kennfeld betriebspunktabhängig gespeichert ist.

4. Verfahren nach einem der Ansprüche 1 bis 3, **dadurch gekennzeichnet, daß** vorgegebene Betriebspunktbereiche für eine Adaption des ersten oder zweiten Adaptionskreises gesperrt sind.

5. Verfahren nach einem der Ansprüche 1 bis 4, **dadurch gekennzeichnet, daß** für die Adaptionswerte (AD1(z); (AD2)) für alle Zylinder (z) gültige Maximalwerte ($+AD1_{max}$, $+AD2_{max}$) in Richtung früh oder Minimalwerte ($-AD1_{min}$, $-AD2_{min}$) in Richtung spät vorgegeben sind.

6. Verfahren nach einem der Ansprüche 1 bis 5, **dadurch gekennzeichnet, daß** bei nicht klopfendem Betrieb in einem Bereich (t2 bis t3), in welchem der Klopfverstellwinkel (KNK(z)) größer als der erste Schwellwert (DEC) ist, die Summe aus Klopfverstellwinkel (KNK(z)) und erstem Adaptionswert (AD1(z)) mit der Schrittweite ($S_{Kinc}$) inkrementiert wird.

**Claims**

1. Method for the cylinder-selective knock control of an internal combustion engine, in which a predetermined cylinder-selective basic ignition angle (GZ(z)) associated with knock-free operation and a cylinder-selective knock adjustment angle (KNK(z)) that increases stepwise with a predetermined step size ($S_{Kdec}$) in the retarded direction each time a knock (K) occurs and decreases stepwise with a predetermined step size ($S_{Kinc}$) in the advanced direction after each engine cycle (720° of crank angle) during knock-free operation form a cylinder-selective ignition angle in association with the respective operating point, which is dependent on load (L) and engine speed (n), **characterized in that** a cylinder-selective first adaptation value (AD1(z)) of a first adaptation circuit is determined from a comparison of the knock adjustment angle (KNK(z)) with a first (DEC) and a second threshold value (INC),
**in that** the first threshold value (DEC) is greater than the step size ($S_{Kdec}$), specified in the retarded direction, of the cylinder-selective knock adjustment angle (KNK(z)),
**in that** the second threshold value (INC) is less than the step size ($S_{Kdec}$), specified in the retarded direction, of the cylinder-selective knock adjustment angle (KNK(z)),
**in that** the cylinder-selective adaptation value (AD1(z)) of the first adaptation circuit

- is modified in the retarded direction with a predetermined first adaptation step size ($S_{ADdec}$) after each engine cycle (720° of crank angle) for as long as the knock adjustment angle (KNK(z)) is greater in terms of its absolute value than the first threshold value (DEC)
- is held constant for as long as the knock adjustment angle (KNK(z)) is less than the first threshold value (DEC) and greater than the second threshold value (INC) in terms of its absolute value, and
- is modified in the advanced direction with a predetermined second adaptation step size ($S_{ADinc}$) for as long as the knock adjustment angle (KNK(z)) is less in terms of its absolute value than the second threshold value (INC),
- **in that** a second adaptation value (AD2), associated with all the cylinders (z), of a second adaptation circuit is determined from a comparison of the average value ($\overline{AD1}$) of all the cylinder-selective adaptation values (AD1(z)) of the current operating point with a predetermined threshold (S2), and
- **in that** the cylinder-selective first adaptation value (AD1(z)) and the second adaptation value (AD2) associated with all the cylinders (z) is used to form a cylinder-selective total ignition angle (ZW(z)) in accordance with the formula

$$ZW(z) = GZ(z) - KNK(z) - AD1(z) - AD2$$

where z is the number of the cylinder.

2. Method according to Claim 1, **characterized in that** the second adaptation value (AD2) of the second adaptation circuit

- is modified in the retarded direction by a predetermined decrement (-D) after each engine cycle if the average value ($\overline{AD1}$) of all the cylinder-selective adaptation values (AD1(z)) of the current operating point has a negative sign and is greater in terms of its absolute value than the threshold (S2), and
- is modified in the advanced direction by a predetermined increment (+I) after each engine cycle if the average value ($\overline{AD1}$) is less in terms of its absolute value than the threshold (S2).

3. Method according to Claim 1 or 2, **characterized in that** at least one of the quantities from the group comprising the first step size ($S_{Kdec}$), the second step size ($S_{Kinc}$), the first adaptation step size ($S_{ADdec}$), the second adaptation step size ($S_{ADinc}$), the first threshold value (DEC) and the second threshold value (INC), is stored as a function of the operating point in a map assigned to this quantity.

4. Method according to one of Claims 1 to 3, **characterized in that** adaptation of the first or second adaptation circuit is blocked for predetermined operating point ranges.

5. Method according to one of Claims 1 to 4, **characterized in that** maximum values ($+AD1_{max}$, $+AD2_{max}$) in the advanced direction or minimum values ($-AD1_{min}$, $-AD2_{min}$) in the retarded direction, these values being applicable to all the cylinders (z), are specified for the adaptation values (AD1(z); (AD2)).

6. Method according to one of Claims 1 to 5, **characterized in that** the sum of the knock adjustment angle (KNK(z)) and the first adaptation value (AD1(z)) is incremented with the step size ($S_{Kinc}$) if operation is knock-free in a range (t2 to t3) in which the knock adjustment angle (KNK(z)) is greater than the first threshold value (DEC).

**Revendications**

1. Procédé pour la régulation du cliquetis sélectivement par cylindre dans un moteur à combustion interne, dans lequel, dans un mode qui correspond au point de fonctionnement actuel, qui dépend de la charge (L) et de la vitesse de rotation du moteur (n), un angle d'allumage de base (GZ(z) prédéterminé, correspondant au fonctionnement sans cliquetis, sélectif par cylindre, et un angle de réglage du cliquetis sélectif par cylindre qui s'agrandit par pas successifs dans le sens du "retard" avec une largeur de pas prédéterminée ($S_{Kdec}$) à chaque coup de cliquetis, tandis que, dans un fonctionnement sans cliquetis, il décroît par pas successifs dans le sens de l'"avance" à chaque cycle du moteur (720 ° d'angle du vilebrequin) avec une largeur de pas prédéterminée ($S_{Kinc}$).

**caractérisé**

**en ce qu'**une première valeur d'adaptation sélective par cylindre (AD1 (z)) d'un premier circuit d'adaptation est obtenue sur la base d'une comparaison de l'angle de réglage du cliquetis (KNK (z)) avec une première valeur de seuil (DEC) et une deuxième valeur de seuil (INC),

**en ce que** la première valeur de seuil (DEC) est plus grande de la largeur de pas prédéterminée dans le sens du "retard" ($S_{Kdec}$) de l'angle de réglage du cliquetis sélectif par cylindre (KNK (z)),

**en ce que** la deuxième valeur de seuil (INC) est plus petite que la larguer de pas prédéterminée dans le sens du "retard" ($S_{Kdec}$) de l'angle de réglage du cliquetis sélectif par cylindre (KNK (z))

**en ce que** la valeur d'adaptation sélective par cylindre (AD1 (z) du premier circuit d'adaptation

- est modifiée avec une première largeur de pas d'adaptation prédéterminée ($S_{ADdec}$) après chaque cycle du moteur (720° d'angle du vilebrequin.) dans le sens du "retard" tant que l'angle de réglage du cliquetis (KNK (z)) est plus grand en valeur absolue que la première valeur de seuil (DEC),
- est maintenue constante tant que l'angle de réglage du cliquetis (KNK (z)) est plus petit en valeur absolue que la première valeur de seuil (DEC) et plus grand en valeur absolue que la deuxième valeur de seuil (INC) et
- est modifiée dans le sens de l'"avance" avec une deuxième largeur de pas d'adaptation prédéterminée ($S_{ADinc}$) tant que l'angle de réglage du cliquetis (KNK (z)) est plus petit en valeur absolue que la deuxième valeur de seuil (INSEE)

**en ce qu'**une deuxième valeur d'adaptation (AD2) d'un deuxième circuit d'adaptation, associée à tous les cylindres (z), tirée d'une comparaison de la valeur moyenne (*AD*1) de toutes les valeurs d'adaptation sélectives par cylindre (AD1 (z)) du point de fonctionnement actuel avec un seuil prédéterminée (S2), et

**en ce que** la première valeur d'adaptation sélective par cylindre (AD1 (z)) et la deuxième valeur d'adaptation (AD2) associée à tous les cylindres (z.) sont prises en compte pour former un angle d'allumage global par cylindre (W (z)) par application de la formule suivante

$$Z W (z) = GZ (z) - KNK (z) - AD1 (z) - AD2$$

où z = nombre de cylindres.

2. Procédé selon la revendication 1, **caractérisé en ce que** la deuxième valeur d'adaptation (AD2) du deuxième circuit d'adaptation

- est modifiée d'un décrément prédéterminé (-D) dans le sens du retard après chaque cycle du moteur lorsque la valeur moyenne (*AD*1) de toutes les valeurs d'adaptation sélectives par cylindre (AD1 (z)) du point de fonctionnement actuel a un signe négatif et est plus grande en valeur absolue que le seuil (S2) et
- est modifiée d'un incrément prédéterminé (+ I) dans le sens de l'avance après chaque cycle du moteur lorsque la valeur moyenne (*AD*1) est plus petite en valeur absolue que le seuil (S2).

3. Procédé selon la revendication 1 ou 2, **caractérisé en ce qu'**au moins une des grandeurs suivantes première largeur de pas ($S_{Kdec}$), deuxième largeur de pas ($S_{Kinc}$), première largeur de pas d'adaptation ($S_{ADdec}$), deuxième largeur de pas d'adaptation ($S_{ADinc}$), première valeur de seuil (DEC), deuxième valeur de seuil (INC) est mémorisée en fonction du point de fonctionnement dans un diagramme associé à cette grandeur.

4. Procédé selon une des revendications 1 à 3, **caractérisé en ce qu'**une des régions de point de fonctionnement prédéterminées pour une adaptation du premier ou du deuxième circuit d'adaptation sont verrouillés.

5. Procédé selon une des revendications 1 à 4, **caractérisé en ce que** des valeurs maximales (+$AD1_{max}$, +$AD2_{max}$) dans le sens de l'avance ou des valeurs minimales (-$AD1_{max}$, -$AD2_{max}$) dans le sens du retard) valables pour les valeurs d'adaptation (AD1 (z)) ; (AD2) pour tous les cylindres (z) sont prédéterminées.

6. Procédé selon une des revendications 1 à 5, **caractérisé en ce que**, dans un fonctionnement sans cliquetis dans un intervalle (t2 à t3) dans lequel l'angle de réglage du cliquetis (KNK (z).) est plus grand que la première valeur de seuil (DEC), la somme de l'angle de réglage du cliquetis (KNK (z).) et de la première valeur d'adaptation (AD1 (z)) est incrémentée avec la largeur de pas ($S_{Kinc}$)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2925770 A1
- US 4819603 A
- US 4882695 A